## Europäisches Patentamt

## European Patent Office

## Office européen des brevets

(11) Veröffentlichungsnummer: **0 249 742**
**B1**

(12) **EUROPÄISCHE PATENTSCHRIFT**

(45) Veröffentlichungstag der Patentschrift:
04.04.90

(21) Anmeldenummer: 87106924.1

(22) Anmeldetag: 13.05.87

(51) Int. Cl.⁴: **B23B 3/06**

(54) **Mittenantriebsmaschine.**

(30) Priorität: 16.06.86 DE 3620231

(43) Veröffentlichungstag der Anmeldung:
23.12.87 Patentblatt 87/52

(45) Bekanntmachung des Hinweises auf die Patenterteilung:
04.04.90 Patentblatt 90/14

(84) Benannte Vertragsstaaten:
AT CH ES FR GB IT LI

(56) Entgegenhaltungen:
DE-A- 3 309 324
DE-B- 2 615 432
US-A- 4 296 658

(73) Patentinhaber: EMAG MASCHINENFABRIK GMBH,
Austrasse 24, D-7335 Salach/Württemberg(DE)

(72) Erfinder: Hessbrüggen, Norbert, Sudetenstrasse 47/2,
D-7321 Eschenbach(DE)

(74) Vertreter: Zmyj, Erwin, Dipl.-Ing., Rosenhelmer
Strasse 52, D-8000 München 80(DE)

ACTORUM AG

## Beschreibung

Der Erfindung bezieht sich auf eine Mittenantriebsmaschine mit zwei auf einem Maschinenbett verfahrbaren Mittenantriebs-Spindelkästen und zwei auf demselben Maschinenbett verfahrbaren Werkzeugträgerschlitten, von denen jeweils ein Spindelkasten und ein Werkzeugträgerschlitten einer Maschinenbetthälfte zugeordnet sind.

Bei Maschinen dieser Art müssen bei der Bearbeitung verschieden langer Werkstücke die beiden Spindelkästen, welche das Werkstück gemeinsam aufnehmen, spannen und antreiben, gegeneinander verfahren werden, damit das Werkstück jeweils möglichst an seinem Ende gespannt ist. Hierbei ist es notwendig, daß jeder, einem Spindelkasten zugeordnete Werkzeugträgerschlitten ebenfalls verfahren werden muß, damit er in dem notwendigen Abstand zum Spindelkasten zu Beginn der Bearbeitung des Werkstückes steht.

Zum Verschieben dieser beiden Maschineneinheiten auf jeder Maschinenbetthälfte sind bisher durch Servomotoren antreibbare Kugelrollspindeln eingesetzt worden, die jeweils etwa die Länge eines halben Maschinenbettes haben müssen, um die entsprechende Maschineneinheit verfahren zu können. Lange Kugelrollspindeln erfordern nicht nur einen hohen Aufwand bei ihrer Herstellung, sondern bereiten auch Schwierigkeiten hinsichtlich ihres Schutzes gegen Verschmutzung durch Kühlmittel und Späne beim Einsatz in der Maschine. Es sind auch Zahnstangen-Triebe eingesetzt worden, die wiederrum schmutzanfällig sind und einen entsprechend hohen Aufwand beim Einsatz von Abdeckungen und Schutzvorrichtungen bedingen.

Aufgabe der Erfindung ist es, eine Mittenantriebsmaschine der im Oberbegriff des Anspruchs 1 erläuterten Art so auszugestalten, daß der Spindelkasten und der Werkzeugträgerschlitten einer jeden Maschinenbetthälfte, mit einer einfachen Antriebseinrichtung verschiebbar und obendrein in einfacher Weise steuerbar ist.

Diese Aufgabe wird durch die im Anspruch 1 angegebenen Mittel gelöst.

Durch die Kupplung des Spindelkastens und des Werkzeugträgerschlittens einer Bearbeitungsseite des Maschinenbettes über eine einzige gemeinsame Antriebseinheit, die ein Verfahren beider Maschineneinheiten dadurch ermöglicht, daß jeweils einer dieser beiden Maschineneinheiten gegenüber dem Maschinenbett festgeklemmt wird, ist ein sehr rasches Einstellen und Umrüsten der Maschine möglich, wobei das wechselseitige Festklemmen jeder Maschineneinheit gegenüber dem Maschinenbett eine kurze Antriebsspindel zwischen diesen beiden Maschineneinheiten und ein in einfacher und exakter Weise steuerbarer Servomotor ermöglicht.

Eine bevorzugte Ausgestaltung der Erfindung sieht vor, daß die Antriebseinheit eine Kugelrollspindel, eine mit der Kugelrollspindel zusammenwirkende Mutter und einen Antriebsmotor zur Erzeugung einer Drehbewegung zwischen Kugelrollspindel und Mutter umfaßt.

Die verwendete Kugelrollspindel braucht nicht annähernd die Länge des halben Maschinenbettes aufzuweisen, wie dies notwendig wäre, wenn die beiden Maschineneinheiten nicht wechselseitig festklemmbar wären, sondern nur noch eine solche Länge, die sinnvoll ist, um die beiden Maschineneinheiten im Wechsel relativ zueinander zu verfahren, wodurch diese Kugelrollspindel sehr kurz gehalten werden kann, da es möglich ist, auch große Entfernungen längs des Maschinenbettes im sogenannten Wechselschritt zu durchfahren, wobei die Maschineneinheiten abwechselnd gegenüber dem Maschinenbett festgeklemmt werden und die jeweils lose Maschineneinheit verfahren wird.

Zum Festklemmen des Spindelkastens und des Werkzeugträgerschlittens am Maschinenbett weisen diese Maschineneinheiten jeweils mindestens eine Feststelleinrichtung, die als hydraulisch betätigbare Untergriffleiste ausgebildet ist und eine am Maschinenbett ausgebildete Führungsleiste untergreift.

Durch Verwendung von vorzugsweise drehstrombetriebenen Servomotoren in Verbindung mit einer Mikroprozessorsteuerung läßt sich jeder Einrichtvorgang ohne Endschalter und Schaltnocken durchführen und die beim Arbeitstakt und beim Einrichten der Maschine anfallenden Fahrwege können schnell überbrückt werden, wodurch die Nebenzeiten beträchtlich verkürzt sind. Durch die Verwendung einer Mikroprozessorsteuerung mit geschlossenem Lageregelkreis lassen sich die Fahrwege vorprogrammieren und exakt einhalten. Durch diese Mikroprozessorsteuerung werden auch die beim Verfahren beider Maschineneinheiten notwendigen Klemmvorgänge gesteuert.

Ein vorteilhaftes Merkmal der Erfindung besteht darin, daß sowohl der Spindelkasten als auch der Werkzeugträgerschlitten mit einem gemeinsamen Meßsystem zur Durchführung des Arbeitstaktes auskommen. Die Fahrbefehle zum Verfahren des Spindelkastens oder des Werkzeugträgerschlittens werden numerisch vorgegeben und der Rechner der Mikroprozessorsteurung berücksichtigt beim Fahren des Spindelkastens oder des Werkzeugträgerschlittens nicht nur die Richtungslogik, sondern addiert oder subtrahiert auch Maße, um beide Maschineneinheiten nicht nur an einen bestimmten Ort verfahren zu können, sondern beispielsweise auch das Umschalten von Eilgang auf Vorschub zu verwirklichen.

Die Erfindung wird nun anhand eines in der Zeichnung dargestellten Ausführungsbeispieles erläutert. In der Zeichnung zeigen:

Fig. 1 eine schematische Darstellung einer Hälfte einer Mittenantriebsmaschine;

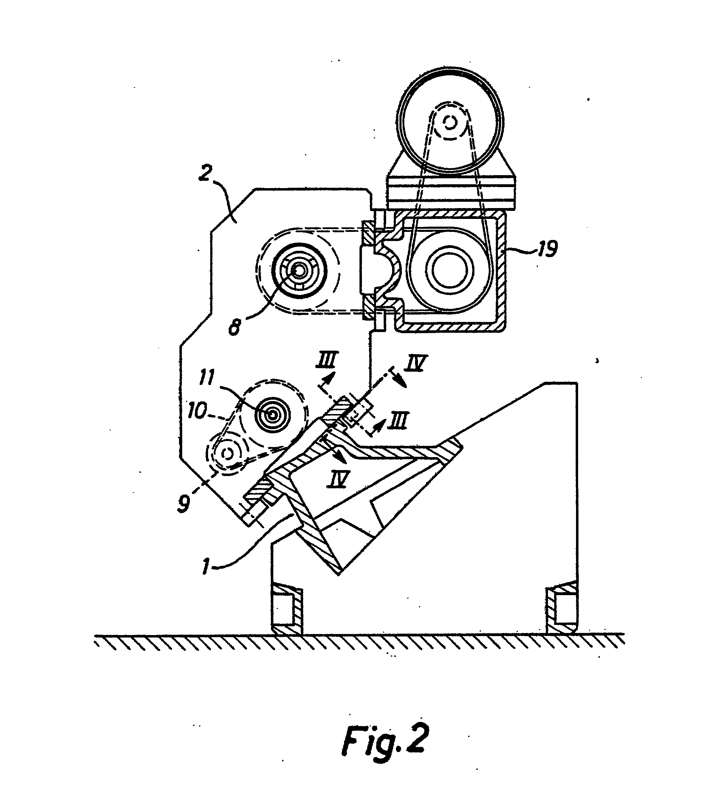

Fig. 2 einen Schnitt nach der Linie II-II in Fig. 1;

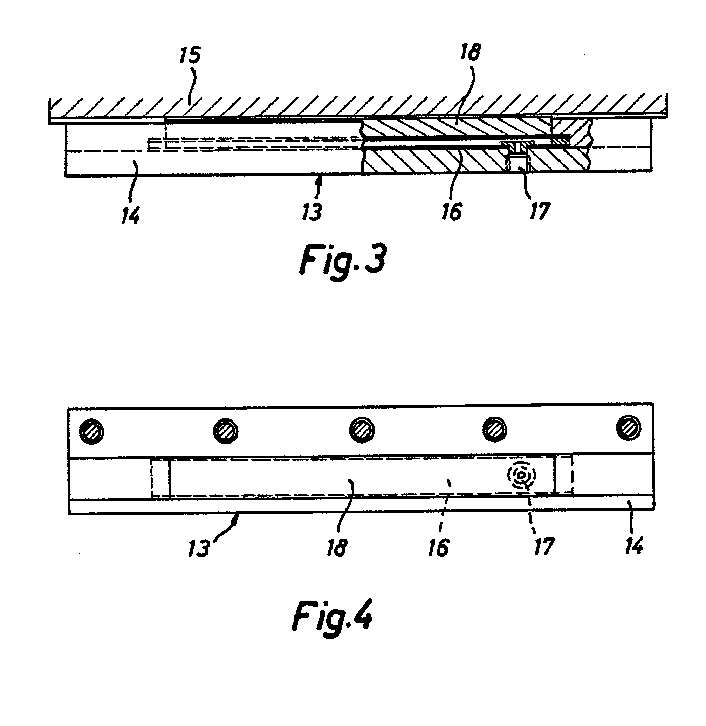

Fig. 3 einen Schnitt nach der Linie III-III in Fig. 2 in vergrößertem Maßstab;

Fig. 4 einen Schnitt nach der Linie IVIV in Fig. 2 in vergrößertem Maßstab;

Fig. 5 eine schematische Darstellung der programmtechnischen Verarbeitung der Maschinenbewegungen.

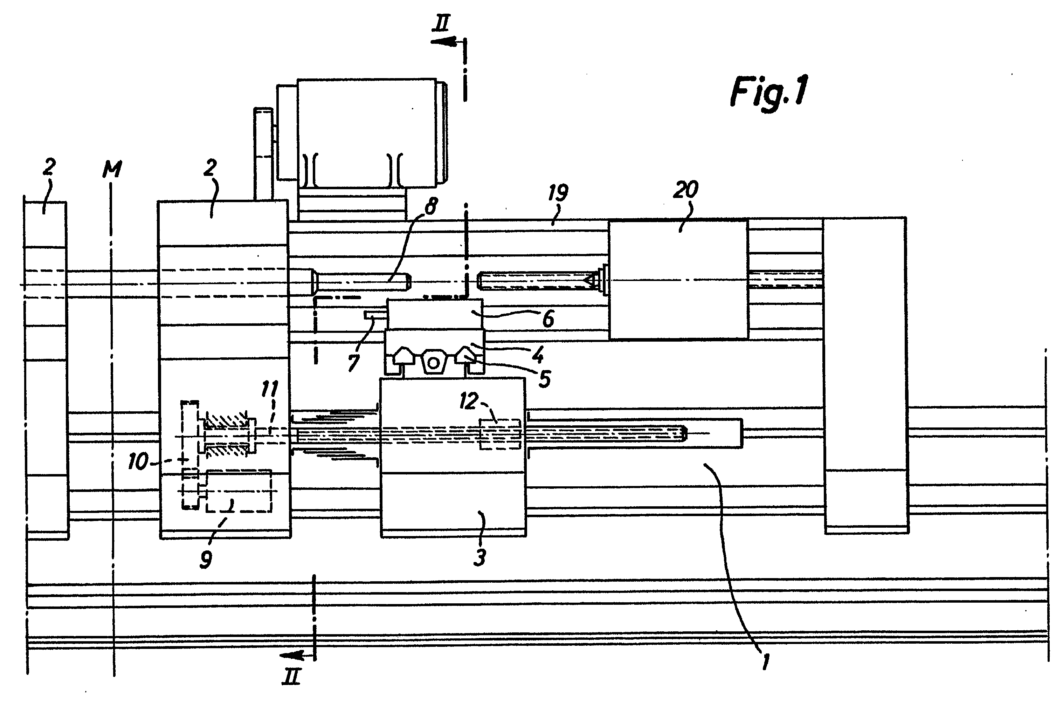

Wie aus Fig. 1 ersichtlich sind auf einem Maschinenbett jeder Maschinenbetthälfte jeweils ein Mittenantriebs-Spindelkasten 2 und ein Werkzeugträgerschlitten 3 verfahrbar angeordnet, wobei die Maschinenbettmitte mit einer strichpunktierten Linie M angedeutet ist. Die in Fig. 1 dargestellte Ausgestaltung ist spiegelbildlich auf der linken Seite dieser Mittellinie in gleicher Weise ausgeführt. Jeder Spindelkasten 2 ist nach Art eines Schlittens auf dem Maschinenbett 1 geführt. Der Werkzeugträgerschlitten 3 trägt einen Schlitten 4, der auf einer Führung 5, welche quer zum Maschinenbett 1 auf dem Werkzeugträgerschlitten 3 angeordnet ist und ist mit einem Werkzeugrevolver 6 versehen, der Werkzeuge 7 trägt. Der Schlitten 4 ist zur Anstellung der Werkzeuge 7 an ein Werkstück 8 auf den Führungen 5 quer zur Maschinenlängsrichtung verfahrbar. Das Werkstück 8 ist in beiden Mittenantriebs-Spindelkästen 2 gespannt und wird von beiden Spindelkästen gleichzeitig angetrieben.

Zur Einstellung der Maschine und zur Durchführung eines Arbeitstaktes ist es notwendig, die Spindelkästen und die Werkzeugträgerschlitten auf dem Maschinenbett 1 der Werkstücklänge entsprechend einzurichten, wobei der Spindelkasten verfahren werden muß, um den Abstand zwischen beiden Spindelkästen entsprechend der Länge der Werkstückes einzustellen, während der Werkzeugträgerschlitten während des Arbeitstaktes Bewegungen in Richtung der Werkstücklängsachse bei dessen Bearbeitung ausführen muß.

Zur Durchführung dieser Fahrbewegungen ist in jedem Spindelkasten 2 ein vorzugsweise drehstrombetriebener Servomotor 9 vorgesehen, der über einen Getriebezug 10 eine Kugelrollspindel 11 in Umdrehung versetzt, welche in dem Werkzeugträgerschlitten 3 durch eine Mutter 12 hindurchgreift, welche im Werkzeugträgerschlitten 3 festgehalten ist. Wird die Kugelrollspindel 11 in der einen Richtung gedreht, so entfernen sich die beiden Schlitten 2 und 3 voneinander, wogegen beim Antrieb der Kugelrollspindel 11 in der anderen Richtung beide Schlitten aufeinander zubewegt werden. Um eine gezielte Bewegung eines der beiden Schlitten bzw. Maschineneinheiten zu ermöglichen, sind an jedem dieser Schlitten Feststelleinrichtungen 13 bzw. 13' vorgesehen, die jeweils in einer Untergriffleiste 14 angeordnet ist, die eine am Maschinenbett ausgebildete Führungsleiste 15 untergreift.

Die Feststelleinrichtung 13 bzw. 13' umfaßt eine abgedichtete Membran 16 mit einem Hydraulikanschluß 17, die eine Klemmleiste 18, welche in der Untergriffleiste 14 verschiebbar geführt ist, gegen die Führungsleiste 15 drückt, wenn durch den Anschluß 17 Hydraulíköl in den Innenraum der Membran 16 zugeführt wird.

In der Zeichnung ist noch parallel zu jedem Maschinenbett 1 eine weitere Führung 19 für einen Reitstock 20 vorgesehen.

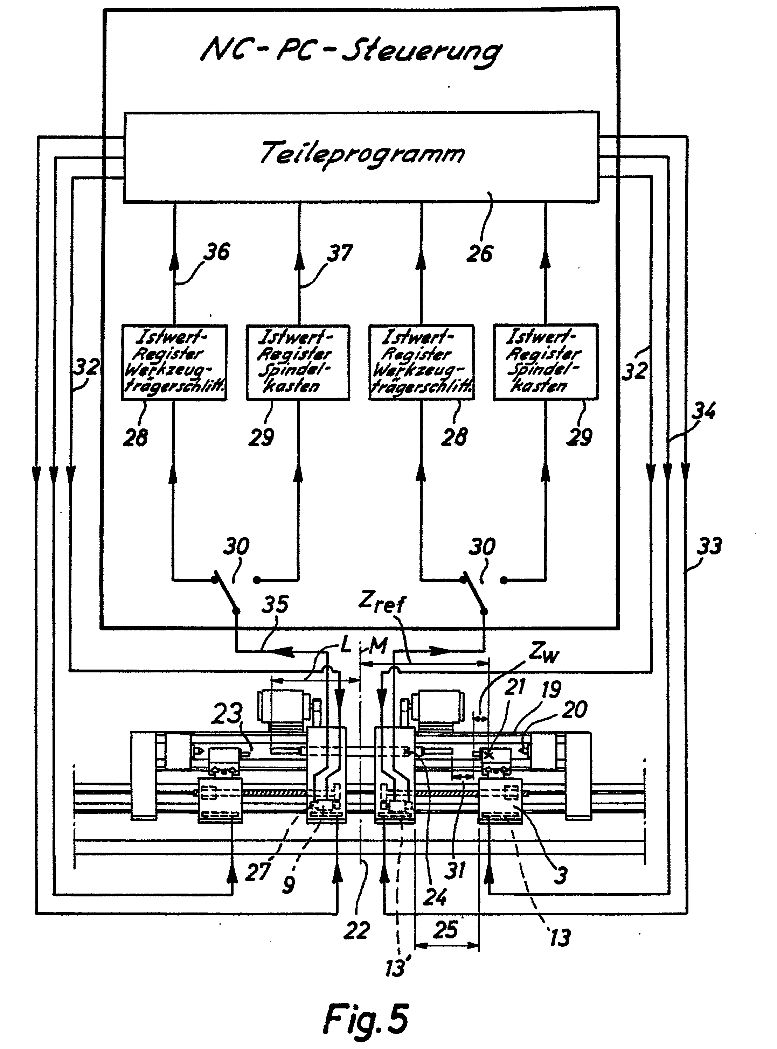

Die programmtechnische Verarbeitung des wechselseitigen Bewegens beider Maschineneinheiten jeder Bettseite ergibt sich aus Fig. 5. Der Bewegungsablauf der einzelnen Maschineneinheiten, d.h. des Werkzeugträgerschlittens und des Spindelkastens wird durch eine NC-PC-Steuerung der Werkzeugmaschine gesteuert.

Zu Beginn eines Bearbeitungsvorganges wird die erste Maschineneinheit, d.h. der Werkzeugträgerschlitten 3, einer jeden Bettseite in die äußere Ausgangslage gebracht, wobei sein Bezugspunkt 21 zur Mittenebene 22 des Maschinenbettes den Abstand $Z_{ref}$ aufweist. Der Abstand der Werkzeugspitze 23 zum Bezugspunkt des Werkzeugträgerschlittens 3 ist mit $Z_W$ bezeichnet. Die zweite Maschineneinheit, der Spindelkasten 2, befindet sich zum Werkzeugträgerschlitten 3 im maximalen Abstand, der aufgrund der Arbeitslänge der Kugelrollspindel 11 möglich ist. Sein Bezugspunkt 24 weist einen Abstand zur Mittenebene 22 auf, der um den möglichen gegenseitigen Verfahrweg geringer ist, als dies dem Abstand des Bezugspunktes 21 von der Mittenebene 22 entspricht. Der mögliche Verfahrweg, der in der Darstellung nach Fig. 5 dem dargestellten freien Abstand zwischen den Maschineneinheiten entspricht, ist mit 25 bezeichnet. Die Länge des Werkstückes 8 bezogen auf eine Maschinenbettseite, d.h. der Abstand von einem Ende bis zur Mittenebene 22, ist mit L bezeichnet. In dem Teileprogramm, das durch das Rechteck 26 symbolisiert ist, ist die Länge L des Werkstückes gespeichert, um den Werkzeugträgerschlitten 3 und den Spindelkasten 2 für die Bearbeitung des Werkstückes 8 in die richtige Position bringen zu können. Zu diesem Zweck ist am Motor 9 des Spindelkastens ein Drehgeber 27 vorgesehen, dessen Impulse je nach Funktionszustand der Feststelleinrichtung 13 des Werkzeugträgerschlittens 3 bzw. 13' des Spindelkastens 2 in einem Istwert-Register 28 für den Werkzeugträgerschlitten 3 bzw. in einem Istwert-Register 29 für den Spindelkasten 2 gespeichert werden. Die Umschaltung erfolgt durch einen symbolisch angedeuteten Schalter 30, der den jeweiligen Betriebszustand der Feststelleinrichtungen 13 bzw. 13' symbolisiert, d.h. die Feststelleinrichtung 13 des Werkzeugträgerschlittens ist gelöst, wenn der Schalter 30 den Drehgeber 27 mit dem Istwert-Register 28 verbindet. In diesem Zustand kann der Werkzeugträgerschlitten 3 durch Verdrehen der Kugelrollspindel 11 bewegt werden, wobei der Spindelkasten durch die Feststelleinrichtung 13' am Bett 1 festgeklemmt ist. Wird diese Feststelleinrichtung 13' gelöst, so befindet sich der Schalter 30 in der Stellung, in welcher er den Drehgeber 27 mit dem Istwert-Register 29 für den Spindelkasten 2 verbindet. In dieser Betriebsstellung kann der Spindelkasten 2 durch Drehen der Kugelrollspindel 11 bewegt werden, wobei die Feststelleinrichtung 13 des Werkzeugträgerschlittens 3 gegenüber dem Maschinenbett 1 festgeklemmt ist.

Da in das Teileprogramm 26 der Steuerung die Länge L des Werkstückes eingegeben wird und der Abstand der Werkzeugspitze vom Ende des Werkstückes aufgrund der eingegebenen bekannten Werte $Z_{ref}$ und $Z_W$ bekannt ist, so ist auch durch den Rechner der Steuerungsanlage der Wert des Abstandes zwischen der Werkzeugspitze 23 und dem Werkstückende feststellbar, der mit 31 bezeichnet ist. Dieser Wert 31 ergibt sich aus $Z_{ref} - Z_W - L$. Ist dieser Wert wesentlich kleiner als der Abstand 25 zwischen den beiden Maschineneinheiten, so befindet sich der Spindelkasten bereits in der Lage, in welcher das Werkstück gespannt und der Werkzeugträgerschlitten durch Antrieb des Motors 9 nach Festklemmen des Spindelkastens am Maschinenbett gegen das Werkstück herangefahren werden kann. Ist dagegen dieser errechnete Wert für den Abstand 31 wesentlich größer als der Abstand zwischen den Maschineneinheiten, so wird im Teileprogramm durch den dort vorhandenen Rechner festgelegt, wie oft die beiden Maschineneinheiten 2 und 3 wechselseitig festgeklemmt und gegeneinander bewegt werden, bis diese Maschineneinheiten in der gewünschten Arbeitsposition bezogen auf das Werkstück stehen. Von dem Teileprogramm 26 aus werden die Feststelleinrichtungen gesteuert. Da die Kugelrollspindel 11 im Spindelkasten 2 axial festgelegt ist, kann durch ihren Antrieb der Werkzeugträgerschlitten 3 gegen den Spindelkasten 2 verfahren werden, wenn die Feststelleinrichtung 13' des Spindelkastens am Maschinenbett festgeklemmt und die Feststelleinrichtung 13 des Werkzeugträgerschlittens gelöst ist. Dagegen kann der Spindelkasten vom Werkzeugträgerschlitten weggefahren werden, wenn die Feststelleinrichtung 13' des Spindelkastens gelöst und die Feststelleinrichtung 13 des Werkzeugträgerschlittens am Maschinenbett festgeklemmt ist. Da die jeweils über den Drehgeber 27 in den Istwert-Registern gespeicherten Werte, die dem Verfahrweg entsprechen, gespeichert und an das Teileprogramm abgegeben werden, ist der dort vorhandene Rechner in der Lage, den jeweils vorhandenen Abstand der Maschineneinheiten und des Werkzeuges in bezug auf das Werkstück zu errechnen und damit den Antriebsmotor 9 und die Feststelleinrichtungen in der oben beschriebenen Weise so lange zu beeinflussen, bis die gewünschte Position erreicht ist. Die Steuerung des Antriebsmotors 9 vom Teileprogramm erfolgt über die Leitung 32, die Steuerung der Feststelleinrichtungen 13 und 13' erfolgt über die Leitungen 33 und 34, die Übermittlung der dem Verfahrweg entsprechenden Signale ausgehend vom Drehgeber 27 erfolgt über die Leitung 35 und die Istwert-Register 28 und 29 sind mit dem Teileprogramm über die Leitungen 36 und 37 verbunden.

## Patentansprüche

1. Mittenantriebsmaschine mit zwei auf einem Maschinenbett verfahrbaren Mittenantriebs-Spindelkästen und zwei auf demselben Maschinenbett verfahrbaren Werkzeugträgerschlitten, von denen jeweils ein Spindelkasten und ein Werkzeugträgerschlitten einer Maschinenbetthälfte zugeordnet sind, dadurch gekennzeichnet, daß jeweils ein Spindelkasten (2) und ein Werkzeugträgerschlitten (3) durch eine einzige gemeinsame Antriebseinheit (9, 10, 11) verfahrbar sind, die auf dem einen der beiden angeordnet ist und an dem anderen der beiden angreift, und daß eine Steuerung vorgesehen ist, die die Maschine derart steuert, daß beim Verfahren des Spindelkastens (2) der Werkzeugträgerschlitten gegenüber dem Maschinenbett mittels einer Feststelleinrichtung (13) festgeklemmt ist und beim Verfahren des Werkzeugträgerschlittens (3) der Spindelkasten (2) gegenüber dem Maschinenbett (1) mittels einer Feststelleinrichtung (13') festgeklemmt ist.

2. Mittenantriebsmaschine nach Anspruch 1, dadurch gekennzeichnet, daß die Antriebseinheit eine Kugelrollspindel (11), eine mit der Kugelrollspindel zusammenwirkende Mutter (12) und einen Antriebsmotor (9) zur Erzeugung einer Drehbewegung zwischen Kugelrollspindel (11) und Mutter (12) umfaßt.

3. Mittenantriebsmaschine nach Anspruch 2, dadurch gekennzeichnet, daß der Antriebsmotor (9) die Kugelrollspindel (11) antreibt.

4. Mittenantriebsmaschine nach Anspruch 2, dadurch gekennzeichnet, daß der Antriebsmotor (9) die Mutter (12) antreibt.

5. Mittenantriebsmaschine nach einem der Ansprüche 1 bis 4, dadurch gekennzeichnet, daß der Spindelkasten (2) und der Werkzeugträgerschlitten (3) zum Festklemmen jeweils mindestens eine Feststelleinrichtung (13, 13') aufweisen, die als hydraulisch betätigbare Untergriffleiste (14) ausgebildet ist, die eine am Maschinenbett (1) ausgebildete Führungsleiste (15) untergreift.

## Claims

1. Central driving engine with two central driving headstocks which are movable on a bench and two tool support sliding carriages, which are movable on the same bench, whereof in each case one headstock and one tool support sliding carriage are associated with a half of the bench, characterised in that in each case a headstock (2) and a tool support sliding carriage (3) are movable by a single common driving unit (9, 10, 11), which is arranged on one of the two and engages on the other of the two and that a control is provided, which controls the machine such that on moving the headstock (2), the tool support sliding carriage is clamped with respect to the bench by means of a clamping device (13) and on moving the tool support sliding carriage (3), the headstock (2) is clamped with respect to the bench (1) by means of a clamping device (13').

2. Central driving engine according to Claim 1, characterised in that the driving unit comprises a ball roller spindle (11), a nut (12) co-operating with the ball roller spindle and a driving motor (9) for producing a rotary motion between the ball roller spindle (11) and nut (12).

3. Central driving engine according to Claim 2, characterised in that the driving motor (9) drives the ball roller spindle (11).

4. Central driving engine according to Claim 2, characterised in that the driving motor (9) drives the nut (12).

5. Central driving engine according to one of Claims 1 to 4, characterised in that for clamping the headstock (2) and the tool support sliding carriage (3) in each case have at least one clamping device (13, 13'), which device is constructed as a hydraulically actuable underlap strip (14), which underlaps a guide strip (15) constructed on the bench (1).

**Revendications**

1. Machine à entraînement central avec deux poupées à entraînement central pouvant se déplacer sur un banc de la machine et deux chariots porte-outils pouvant se déplacer sur le même banc de la machine, chaque poupée étant associée à un chariot porte-outil d'une moitié du banc de la machine, caractérisée par le fait que chaque poupée (2) et son chariot porte-outil (3) peuvent être déplacés par une seule unité d'entraînement commune (9, 10, 11) qui est portée par l'un des deux et qui est en prise avec l'autre, une commande étant prévue pour actionner la machine de telle sorte que le chariot porte-outil soit bloqué par rapport au banc de la machine, au moyen d'un dispositif d'immobilisation (13), ceci lors du déplacement de la poupée (2), et que la poupée (2) soit bloquée par rapport au banc (1) de la machine, par un dispositif d'immobilisation (13'), lors du déplacement du chariot porte-outil (3).

2. Machine à entraînement central selon la revendication 1, caractérisée par le fait que l'unité d'entraînement comprend une tige filetée à roulement à billes (11), un écrou (12) coopérant avec la tige filetée à roulement à billes et un moteur d'entraînement (9) pour engendrer un mouvement de rotation entre la tige filetée à roulement à billes (11) et l'écrou (12).

3. Machine à entraînement central selon la revendication 2, caractérisée par le fait que le moteur d'entraînement (9) entraîne la tige filetée à roulement à billes (11).

4. Machine à entraînement central selon la revendication 2, caractérisée par le fait que le moteur d'entraînement (9) entraîne l'écrou (12).

5. Machine à entraînement central selon l'une des revendications 1 à 4, caractérisée par le fait que, pour le blocage, la poupée (2) et le chariot porte-outil (3) présentent chacun au moins un dispositif d'immobilisation (13, 13') qui est réalisé sous la forme d'une baguette (14) à actionnement hydraulique qui vient en prise par-dessous par une baguette de guidage (15) formée sur le banc (1) de la machine.

*Fig.1*

Fig.2

Fig.3

Fig.4

EP 0 249 742 B1

Fig.5